# EUROPÄISCHE PATENTSCHRIFT

(11) **EP 3 728 383 B1**
(45) Veröffentlichungstag und Bekanntmachung des Hinweises auf die Patenterteilung: **04.08.2021**
(21) Anmeldenummer: 18814934.8
(22) Anmeldetag: 12.12.2018
(51) Int. Cl.: C08G 18/75, C08G 18/02, C08G 18/16, C08G 18/28

(54) **WÄSSRIGE POLYCARBODIIMID-DISPERSION MIT ERHÖHTER LAGERSTABILITÄT UND VERFAHREN ZU IHRER HERSTELLUNG**
AQUEOUS POLYCARBODIIMIDE DISPERSION WITH EXTENDED STORAGE STABILITY AND A METHOD FOR THEIR PREPARATION
DISPERSION AQUEUSE DE POLYCARBODIIMIDE À STABILITÉ AU STOCKAGE ACCRUE ET SON PROCÉDÉ DE PRODUCTION

(30) Priorität: 21.12.2017 EP 17209822
(43) Veröffentlichungstag der Anmeldung: 28.10.2020
(73) Patentinhaber: Covestro Deutschland AG, 51373 Leverkusen (DE)
(72) Erfinder: BÜCHNER, Jörg, 51467 Bergisch Gladbach (DE); LUDEWIG, Michael, 51519 Odenthal (DE); AVTOMONOV, Evgeny, 51375 Leverkusen (DE); MELCHIORS, Martin, 42799 Leichlingen (DE)
(74) Vertreter: Levpat
(86) Internationale Anmeldenummer: PCT/EP2018/084557
(87) Internationale Veröffentlichungsnummer: WO 2019/121238

(56) Entgegenhaltungen:
- WO-A2-2011/120928

## Beschreibung

Die vorliegende Erfindung betrifft lagerstabile wässrige Dispersionen von hydrophil modifizierten Polycarbodiimidharzen, ein Verfahren zu deren Herstellung sowie die Verwendung einer Salzkomponente zur Verringerung der Carbodiimid-Hydrolyse in wässrigen Polycarbodiimid-Dispersionen.

Dispersionen aus Polycarbodiimidharz als Vernetzungsmittel für Carboxylgruppen enthaltende Dispersionspolymere sind bereits bekannt.

So beschreibt beispielsweise EP 0 686 626 A1 ein hydrophil modifiziertes Tetramethylxylylencarbodiimid mit dem mittleren Polymerisationsgrad von 1 - 30. Die wässrige Dispersion dieses Polycarbodiimidharzes zeichnet sich durch eine gute Lagerstabilität aus. Nachteil des in dieser Publikation beschriebenen Polycarbodiimids ist jedoch die hohe Katalysatormenge, die zur Carbodiimidisierung benötigt wird und die sehr geringe Reaktivität des Polycarbodiimids.

EP 2 552 982 A2 offenbart ein Verfahren zur Herstellung von Polycarbodiimid aus aliphatischen oder cycloaliphatischen Diisocyanat, wobei das während der Carbodiimidisierung entstehende Reaktionsgas Kohlendioxid zeitweises oder permanent aus dem Reaktionsgemisch entfernt wird. Vorteil dieser Arbeitsweise ist die geringe Menge des zur Carbodiimidisierung benötigten Katalysators.

EP 1 644 428 A2 (WO 2005/003204 A2) beschreibt ein Verfahren zur Herstellung stabiler, wässriger Polycarbodiimid-Dispersionen, die keine organischen Lösungsmittel enthalten und die geeignet sind, um als Vernetzungsmittel verwendet zu werden. Die verbesserte Lagerstabilität dieser wässrigen Dispersionen wird durch Einstellen des pH-Werts auf einen Wert zwischen 9 - 14 durch Zusatz einer Base oder eines Puffers erreicht. Die Polycarbodiimid-Dispersionen sind gemäß der Lehre dieser Publikation über einen Zeitraum von 8 Wochen bei 50 °C stabil. Allerdings macht diese Schrift keine Angaben darüber wie die Lagerstabilität beurteilt oder gemessen wird. Insbesondere finden sich dort keine Angaben, um welchen Prozentsatz der Gehalt an Carbodiimid-Gruppen während Lagerung bei welchen Bedingungen abfällt.

Eigene Versuche der Anmelderin haben ergeben, dass bei 50° C-Lagerung der Carbodiimidgehalt einer nach der Lehre dieser Publikation erzeugten und mit Natronlauge auf pH = 9 eingestellten Polycarbodiimid-Dispersion innerhalb von 8 Wochen um ca. 40% abfällt und bei pH = 10 eingestellt um ca. 15 % abfällt.

Polycarbodiimid-Dispersionen, die aliphatische und cycloaliphatische Polycarbodiimidharze enthalten zeichnen sich auch durch ihre geringe Toxizität aus. Gemäß der deutschen Gefahrstoffverordnung können Stoffe oder Gemische mit einem pH-Wert von ≥ 11,5 als "ätzend" eingestuft werden und müssen dann mit dem Gefahrensymbol "Ätzwirkung" (GHS05) und dem Signalwort "Gefahr" gekennzeichnet werden. Dieser Umstand betrifft auch die Lehre von EP 1 644 428 A2 (WO 2005/003204 A2).

Es besteht im Markt Bedarf nach Polycarbodiimid-Dispersionen, insbesondere bei Lagerung bei einer Temperatur von 60° C, die keine Gefahrstoffe in Sinne der Gefahrstoffverordnung sind. Bei Wärmelagerung bei 60° C über einen Zeitraum von 5 Tagen sollte der Carbodiimidgehalt der lagerstabilen Polycarbodiimid-Dispersionen weniger stark als bei unbehandelten Polycarbodiimid-Dispersionen gesunken sein.

Erfindungsgemäß gelöst wird die Aufgabe durch eine Dispersion gemäß Anspruch 1, ein Verfahren gemäß Anspruch 10 und eine Verwendung gemäß Anspruch 15. Vorteilhafte Weiterbildungen sind in den Unteransprüchen und der nachfolgenden Beschreibung angegeben. Sie können beliebig kombiniert werden, sofern sich aus dem Kontext nicht eindeutig das Gegenteil ergibt.

Eine wässrige Polycarbodiimid-Dispersion zeichnet sich demnach dadurch aus, dass
die Dispersion eine Salzkomponente umfasst, welche wenigstens ein Salz mit einem Kation und einem Anion umfasst, das in seiner höchsten Deprotonierungsstufe vorliegt und in dieser höchsten Deprotonierungsstufe eine Basenstärke (pK_{B}-Wert) von ≥ 9 aufweist und
die Dispersion eine elektrische Leitfähigkeit gemäß DIN EN 27888 und gemessen bei 20 °C aufweist, welche höher ist als die einer nicht die Salzkomponente umfassenden, jedoch ansonsten identischen Dispersion,
wobei für den Fall, dass die Salzkomponente Magnesiumsulfat und/oder Calciumsulfat umfasst, wenigstens ein weiteres Anion mit einer Basenstärke (pK_{B}-Wert) von ≥ 9 in seiner höchsten Deprotonierungsstufe in der Salzkomponente vorliegt und
wobei für den Fall, dass die Salzkomponente Aluminium(III)chlorid zu ≥ 95 mol-% umfasst, die elektrische Leitfähigkeit der Dispersion gemäß DIN EN 27888 und gemessen bei 20 °C ≤ 1000% der Leitfähigkeit einer nicht die Salzkomponente umfassenden, jedoch ansonsten identischen Dispersion beträgt.

Es wurde überraschenderweise gefunden, dass die erfindungsgemäßen Dispersionen auch ohne Einstellung des pH-Werts durch eine Base und/oder Puffer auf pH > 9 wie in EP 1 644 428 A2 (WO 2005/003204 A2) beschrieben gegenüber unbehandelten Dispersionen eine erhöhte Lagerstabilität, das heißt eine geringere Abnahme des Carbodiimid-Gehalts, aufweisen. Dieses lässt sich ohne aufwendige Langzeitversuche durch Lagerung der Proben bei 60 °C für 120 Stunden beobachten.

Die Salzkomponente umfasst mindestens ein Salz mit Anion und Kation. Die Salzkomponente kann auch mehrere Salze oder ein gemischtes Salz mit mehreren Anionen und mehreren Kationen umfassen. Es ist erfindungsgemäß vorgesehen, dass in der Salzkomponente wenigstens ein Anion in seiner höchsten Deprotonierungsstufe vorliegt und in dieser höchsten Deprotonierungsstufe eine Basenstärke (pKB-Wert) von ≥ 9 (bevorzugt ≥ 10) aufweist.

"Höchste Deprotonierungsstufe" bedeutet hierbei, dass das Anion keine aciden Protonen mehr aufweist. Stammt das Anion aus einer zweiprotonigen Säure, so ist die höchste Deprotonierungsstufe das zweifach negativ geladene Anion. Gleiches gilt, wenn das Anion aus einer dreiprotonigen Säure stammt: dann ist die höchste Deprotonierungsstufe das dreifach negativ geladene Anion. Dadurch, dass das Anion in der höchsten Deprotonierungsstufe vorliegt, kann es auch nicht als Puffer wirken.

Die Basenstärke (pK_{B}-Wert) des Anions in der höchsten Deprotonierungsstufe wird bei Standardbedingungen gemessen und kann in vielen Fällen in Tabellen nachgeschlagen werden. Beispiele solcher Anionen mit einem pKB-Wert von 9 oder mehr sind (pK_{B}-Wert in Klammern): ClO₄⁻ (24), I⁻ (24), Br⁻ (22,9), Cl⁻ (20), NO₃⁻ (15,32), SO₄²⁻ (12,08), F⁻ (10,86) und HCOO⁻ (10,25).

Die Anionen sind somit sehr schwache Basen. Wenn die Anionen nicht von Brönstedt-Säuren, sondern von Lewis-Säuren abstammen, lässt sich strenggenommen kein pKB-Wert bestimmen. Aufgrund der Tatsache, dass solche Anionen aber auch sehr schwache Basen sind, fallen sie erfindungsgemäß ebenfalls unter die Definition von "pKB-Wert ≥ 9". Beispiele für solche Anionen sind BF₄⁻, BPh₄⁻ und AlCl₄⁻.

Erfindungsgemäß mit eingeschlossen als Salze für die Salzkomponente sind Halogenide von Hauptgruppenmetallen wie AlCl₃ und SnCl₂ sowie Halogenide von Nebengruppenmetallen wie FeCl₂. Wenn das Haupt- oder Nebengruppenmetall mehrere Oxidationsstufen einnehmen kann, sind Halogenide des Metalls in der niedrigsten positiven Oxidationsstufe bevorzugt. Ein Beispiel ist die Bevorzugung von Sn(II) gegenüber Sn(IV).

Ohne auf eine Theorie festgelegt zu sein wird angenommen, dass die verbesserte Lagerstabilität der erfindungsgemäßen Dispersionen wenigstens mittelbar mit ihrer elektrischen Leitfähigkeit zusammenhängt. Daher weisen die erfindungsgemäßen Dispersion eine elektrische Leitfähigkeit gemäß DIN EN 27888 und gemessen bei 20 °C auf, welche höher ist als die einer nicht die Salzkomponente umfassenden, jedoch ansonsten identischen Dispersion. So kann bei einer unbehandelten Dispersion die Leitfähigkeit bestimmt werden, danach die Salzkomponente hinzugefügt werden und anschließen erneut die Leitfähigkeit bestimmt werden. Auf diese Weise lässt sich verifizieren, dass die Leitfähigkeit nach Zugabe der Salzkomponente höher ist als vorher.

Wenn die Salzkomponente Magnesiumsulfat und/oder Calciumsulfat umfasst, soll wenigstens ein weiteres Anion mit einer Basenstärke (pKB-Wert) von ≥ 9 (bevorzugt ≥ 10) in seiner höchsten Deprotonierungsstufe in der Salzkomponente vorliegen. Es ist jedoch bevorzugt, dass die Salzkomponente kein Magnesiumsulfat oder Calciumchlorid enthält.

Für den Fall, dass die Salzkomponente Aluminium(III)chlorid zu ≥ 95 mol-% umfasst, soll erfindungsgemäß die elektrische Leitfähigkeit der Dispersion gemäß DIN EN 27888 und gemessen bei 20 °C ≤ 1000% (bevorzugt ≤ 500%) der Leitfähigkeit einer nicht die Salzkomponente umfassenden, jedoch ansonsten identischen Dispersion betragen. Dieses ist eine Abwägung zwischen der durch AlCl₃ hervorgerufenen elektrischen Leitfähigkeit und der sauren Hydrolyse der Carbodiimid-Gruppen in der Dispersion.

Vorzugsweise ist das Polycarbodiimid in den erfindungsgemäßen wässrigen Dispersionen erhältlich aus Isophorondiisocyanat (IPDI), Hexamethylendiisocyanat (HDI), hydriertem Xylylendiisocyanat (H6XDI) oder 4,4'-Dicyclohexylmethandiisocyanat (H12MDI) sowie Monomethoxy-poly(ethylenglykol) und Butoxyethanol. Das Polycarbodiimid kann eine mittlere Funktionalität von 1 bis 10 Carbodiimideinheiten, 2 bis 7 Carbodiimideinheiten oder 3 bis 6 Carbodiimideinheiten pro Molekül aufweisen.

Die erfindungsgemäßen wässrigen Dispersionen eignen sich insbesondere als Bestandteil von Bindemitteln für Beschichtungsmittel oder Imprägnierungsmittel, z.B. für Klebstoffe, Lacke, Anstriche, Papierstreichmassen oder als Bindemittel für Faservliese, d.h. in allen Fällen, in denen eine Vernetzung und Erhöhung der inneren Festigkeit (Kohäsion) gewünscht ist.

Je nach Verwendungszweck kann die wässrige Dispersion Zusatzstoffe wie Verdicker, Verlaufshilfsmittel, Pigmente oder Füllstoffe, Bakterizide, Fungizide etc. enthalten.

Bei der Verwendung als Klebstoff können die erfindungsgemäßen wässrigen Dispersionen neben obengenannten Zusatzstoffen noch spezielle, in der Klebstofftechnologie übliche Hilfs-und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Polymer-Dispersionen, welche als Klebstoff Verwendung finden, enthalten besonders bevorzugt Alkyl(meth)acrylate als Hauptmonomere im Polymer. Bevorzugte Anwendungen im Klebstoffgebiet sind auch Kaschierklebstoffe, z.B. für die Verbund- und Glanzfolienkaschierung (Verklebung von transparenten Folien mit Papier oder Karton). Die erfindungsgemäßen wässrigen Dispersionen können nach üblichen Verfahren auf die zu beschichtenden oder zu imprägnierenden Substrate aufgebracht werden.

Mit den erfindungsgemäßen wässrigen Dispersionen als Bestandteil von Bindemitteln lassen sich insbesondere Gegenstände aus Holz, Metall, Textil, Leder oder Kunststoffe verkleben, imprägnieren oder beschichten.

In einer Ausführungsform weist die Dispersion eine elektrische Leitfähigkeit gemäß DIN EN 27888 und gemessen bei 20 °C auf, welche ≥ 140% (vorzugsweise ≥ 200%, mehr bevorzugt ≥ 250%) der Leitfähigkeit einer nicht die Salzkomponente umfassenden, jedoch ansonsten identischen Dispersion beträgt.

In einer weiteren Ausführungsform weist die Dispersion eine elektrische Leitfähigkeit gemäß DIN EN 27888 und gemessen bei 20 °C von ≥ 300 µS/cm (vorzugsweise ≥ 350 µS/cm, mehr bevorzugt ≥ 400 µS/cm) auf.

In einer weiteren Ausführungsform umfasst die Salzkomponente ein Halogenid-Anion. Hierbei ist Chlorid bevorzugt.

In einer weiteren Ausführungsform umfasst die Salzkomponente ein Alkali- oder Erdalkalimetallkation. Bevorzugt sind Lithium- und/oder Natrium-Kationen.

Es ist weiter bevorzugt, dass die Salzkomponente LiCl und/oder NaCl umfasst. Die Salzkomponente kann neben LiCl und/oder NaCl keine weiteren Salze enthalten.

In einer weiteren Ausführungsform wurde die Dispersion weiterhin durch Anlegen eines Unterdrucks wenigstens teilweise von CO₂ befreit. Dieses erhöht weiter die Lagerstabilität der Dispersion.

In einer weiteren Ausführungsform weist die Dispersion einen pH-Wert von ≥ 5 bis ≤ 9,8 auf. Bevorzugt ist ein pH-Wert von ≥ 6 bis ≤ 8,9.

In einer weiteren Ausführungsform liegt die Salzkomponente in einem Anteil von ≥ 0,01 bis ≤ 1 (bevorzugt ≥ 0,02 bis ≤ 0,8, mehr bevorzugt ≥ 0,06 bis ≤ 0,5) Gewichts-%, bezogen auf das Gesamtgewicht der Dispersion, vor.

In einer weiteren Ausführungsform weist die Dispersion nach Lagerung bei 60 °C für 120 Stunden ≥ 90% (vorzugsweise ≥ 95%) des ursprünglichen Gehalts an Polycarbodiimiden auf. Die Bestimmung der Carbodiimid-Konzentration kann mittels ATR-Infrarotspektroskopie *(attenuated total reflection,* abgeschwächte Totalreflexion) erfolgen. Die Kalibrierung erfolgt über Dicyclohexylcarbodiimid- (DCC-)Lösungen bekannter Konzentration. Die Peakflächen (P_{A}) der Carbodiimidbande bei ca. 2118 cm⁻¹ werden ermittelt. Aus den Daten (Konzentration der DCC-Lösungen und den ermittelten P_{A}) wird eine Kalibriergerade erstellt. Die Bestimmung der Carbodiimid-Konzentration in der Probe erfolgt über P_{A} der Bande bei ca. 2118 cm⁻¹. Die Konzentration [meq DCC/g] wird durch P_{A}/m berechnet, wobei m die Steigung der Kalibriergerade darstellt.

Ein weiterer Aspekt der vorliegenden Erfindung ist ein Verfahren zur Herstellung einer wässrigen Polycarbodiimid-Dispersion, umfassend die Schritte:
A) Reagieren eines Polyisocyanats in Gegenwart eines Carbodiimidisierungs-Katalysators unter Erhalt eines Polycarbodiimids;
B) Hinzufügen einer Verbindung, welche mindestens eine gegenüber Isocyanat- und/oder Carbodiimidgruppen reaktionsfähige Gruppe enthält, während oder nach der Polycarbodiimidbildung in Schritt A); und
C) Dispergieren der nach Schritt B) erhaltenen Verbindung in Wasser unter Erhalt einer Dispersion.

Das Verfahren umfasst weiterhin den Schritt:
D) Hinzufügen einer Salzkomponente zu:
- dem in Schritt C) verwendeten Wasser vor und/oder während der Dispergierung,
- der nach Schritt C) erhaltenen Dispersion,
- dem in Schritt A) eingesetzten Polyisocyanat und/oder
- der in Schritt B) eingesetzten Verbindung
so dass die Dispersion eine elektrische Leitfähigkeit gemäß DIN EN 27888 und gemessen bei 20 °C aufweist, welche höher ist als die einer nicht die Salzkomponente umfassenden, jedoch ansonsten identischen Dispersion,
wobei die Salzkomponente wenigstens ein Salz mit einem Kation und einem Anion umfasst, das in seiner höchsten Deprotonierungsstufe vorliegt und in dieser höchsten Deprotonierungsstufe eine Basenstärke (pK_{B}-Wert) von ≥ 9 (vorzugsweise ≥ 10) aufweist,
wobei für den Fall, dass die Salzkomponente Magnesiumsulfat und/oder Calciumsulfat umfasst, wenigstens ein weiteres Anion mit einer Basenstärke (pKB-Wert) von ≥ 9 (vorzugsweise ≥ 10) in seiner höchsten Deprotonierungsstufe in der Salzkomponente vorliegt und
wobei für den Fall, dass die Salzkomponente Aluminium(III)chlorid zu ≥ 95 mol-% umfasst, die elektrische Leitfähigkeit der Dispersion gemäß DIN EN 27888 und gemessen bei 20 °C ≤ 1000% der Leitfähigkeit einer nicht die Salzkomponente umfassenden, jedoch ansonsten identischen Dispersion beträgt.

Vorzugsweise wird in Schritt B) eine Verbindung eingesetzt, welche eine hydrophile Gruppe und mindestens eine gegenüber Isocyanat- und/oder Carbodiimidgruppen reaktionsfähige Gruppe enthält.

Die Bezeichnung der Schritte im erfindungsgemäßen Verfahren mit A) bis D) ist so zu verstehen, dass keine starre zeitliche Abfolge vorgesehen ist, sondern nur zur Unterscheidung der Verfahrensschritte dient.

Details zur Salzkomponente wurden bereits im Zusammenhang mit der erfindungsgemäßen Dispersion geschildert und sollen hinsichtlich des Verfahrens nicht in allen Einzelheiten wiederholt werden.

Das Polyisocyanat, welches in Schritt A) zum Polycarbodiimid umgesetzt wird, kann ein aliphatisches oder aromatisches Polyisocyanat sein.

Die Umsetzung von Polyisocyanat zu Polycarbodiimid erfolgt in Gegenwart eines Carbodiimidisierungskatalysators, bevorzugt in einer Konzentration 50 bis 3000 ppm, besonders bevorzugt in Gegenwart von 150 bis 1000 ppm, ganz besonders bevorzugt in Gegenwart von 200 bis 700 ppm Carbodiimidisierungskatalysator bezogen auf die molare Menge an Polyisocyanat.

Als Carbodiimidisierungskatalysatoren eignen sich beispielsweise verschiedene Phospholenoxide, zum Beispiel 1-Methyl-2 (und/oder 3)-phospholen-1-oxid, 3-Methyl-2 (und/oder 3)-phospholen-1-oxid, 1-Phenyl-2(und/oder 3)-phospholen-1-oxid, 1-Phenyl-3-methyl-2 (und/oder 3)-phospholen-1-oxid und 1-Ethyl-2(und/oder 3)-phospholen-oxid. Diese Katalysatoren verbleiben gewöhnlich in den Produkten.

Die Umsetzung von Polyisocyanat zu Polycarbodiimid in Schritt A) erfolgt bevorzugt im Bereich von 50 bis 250°C, bevorzugt 160 bis 230° C, besonders bevorzug 185 bis 205° C. Die Umsetzung in Schritt A) kann beispielsweise so durchgeführt werden, dass ein Polycarbodiimid mit einer mittleren Funktionalität von 1 bis 10 Carbodiimideinheiten, 2 bis 7 Carbodiimideinheiten oder 3 bis 6 Carbodiimideinheiten pro Molekül erhalten wird.

In Schritt B) wird das Polycarbodiimid vorzugsweise mit wenigstens einer hydrophilen Verbindung, die mindestens gegenüber Isocyanat- und/oder Carbodiimidgruppen reaktionsfähige Gruppe trägt, zur Reaktion gebracht. Beispiele für solche Verbindungen sind ausgewählt aus der Gruppe bestehend aus Polyethoxymonoolen, Polyethoxydiolen, Polyethoxypolypropoxymonoolen, Polyethoxypolypropoxydiolen, Polyethoxymonoaminen, Polyethoxydiaminen, Polyethoxypolypropoxymonoaminen, Polyethoxypolypropoxydiaminen, Hydroxyalkylsulfonaten, Aminalkylsulfonaten, Polyethoxymono- und -dithiolen, Polyethoxymono- und -dicarbonsäuren, Mono- und Dihydroxycarbonsäuren bzw. deren Salzen und Mischungen der vorgenannten Verbindungen. Man erhält ein hydrophiliertes Polycarbodiimid, in welchem gegebenenfalls nicht abreagierte Isocyanatgruppen mit weiteren gegenüber Isocyanatgruppen reaktionsfähigen Verbindungen, wie zum Beispiel Wasser, Alkoholen, Thiolen, Aminen, Mineral- oder Carbonsäuren zur Reaktion gebracht werden können.

Gemäß Schritt C) erfolgt ein Dispergieren der nach Schritt B) erhaltenen Verbindung in Wasser unter Erhalt einer Dispersion. Der Gehalt an dispergiertem Polycarbodiimid kann beispielsweise ≥ 10 Gewichts-% bis ≤ 90 Gewichts-%, bezogen auf das Gesamtgewicht der Dispersion, betragen. Bevorzugt sind ≥ 30 Gewichts-% bis ≤ 50 Gewichts-%, mehr bevorzugt ≥ 35 Gewichts-% bis ≤ 45 Gewichts-%.

Die Zugabe der Salzkomponente gemäß Schritt D) kann im Prinzip an beliebiger Stelle des Verfahrens erfolgen. Eine bevorzugte Variante ist es, die Salzkomponente bereits zu dem für die Dispergierung verwendeten Wasser vor der Dispergierung hinzuzufügen. Es ist ebenso möglich, dass die Salzkomponente während des Dispergiervorgangs hinzugefügt wird. Weiter bevorzugt ist, dass die Salzkomponente nach erfolgter Dispergierung hinzugefügt wird. Dieses eröffnet die Möglichkeit, die elektrische Leitfähigkeit der Dispersion vor und nach der Salzzugabe zu messen.

In einer Ausführungsform des Verfahrens umfasst die Salzkomponente ein Halogenid-Anion und/oder ein Alkali- oder Erdalkalimetallkation. Hierbei sind Chlorid-Anionen und Lithium- und/oder Natrium-Kationen bevorzugt.

Es ist weiter bevorzugt, dass die Salzkomponente LiCl und/oder NaCl umfasst. Die Salzkomponente kann neben LiCl und/oder NaCl keine weiteren Salze enthalten.

In einer weiteren Ausführungsform des Verfahrens wurde die Dispersion weiterhin durch Anlegen eines Unterdrucks wenigstens teilweise von CO₂ befreit. Dieses erhöht weiter die Lagerstabilität der Dispersion.

In einer weiteren Ausführungsform des Verfahrens ist das Polyisocyanat in Schritt A) ein aliphatisches Polyisocyanat. Vorzugsweise handelt es sich bei dem aliphatischen Polyisocyanat (cycloaliphatische Polyisocyanate sind mit eingeschlossen) um ein Polyisocyanat aus der Gruppe bestehend aus Methylendiisocyanat, Dimethylendiisocyanat, Trimethylendiisocyanat, Tetramethylendiisocyanat, Pentamethylendiisocyanat, Dipropyletherdiisocyanat, 2,2-Dimethylpentandiisocyanat, 3-Methoxyhexandiisocyanat, Octamethylendiisocyanat, 2,2,4-Trimethylpentandiisocyanat, Nonamethylendiisocyanat, Decamethylendiisocyanat, 3-Butoxyhexandiisocyanat, 1,4-Butylenglykoldipropyletherdiisocyanat, Thiodihexyldiisocyanat, Metaxylylendiisocyanat, Paraxylylendiisocyanat, Tetramethylxylylendiisocyanat, 4,4'-Dicyclohexylmethandiisocyanat (H12MDI), Isophorondiisocyanat (IPDI), Hexamethylendiisocyanat (HDI), hydriertes Xylylendiisocyanat (H6XDI), 1,12-Diisocyanatdodecan (DDI), Norbomandiisocyanat (NBDI) und 2,4-Bis(8-isocyanatoctyl)-1,3-dioctylcyclobutan (OCDI) oder deren Mischungen.

Besonders bevorzugt sind Isophorondiisocyanat (IPDI), Hexamethylendiisocyanat (HDI), hydriertes Xylylendiisocyanat (H6XDI), 4,4'-Dicyclohexylmethandiisocyanat (H12MDI). Ganz besonders bevorzugt ist das cycloaliphatische Polyisocyanat 4,4'-Dicyclohexylmethandiisocyanat (H12MDI).

Die Erfindung betrifft weiterhin die Verwendung einer Salzkomponente zur Verringerung der Carbodiimid-Hydrolyse in wässrigen Polycarbodiimid-Dispersionen, wobei
die Salzkomponente wenigstens ein Salz mit einem Kation und einem Anion umfasst, das in seiner höchsten Deprotonierungsstufe eine Basenstärke (pK_{B}-Wert) von ≥ 9 (vorzugsweise ≥ 10) aufweist,
wobei für den Fall, dass die Salzkomponente Aluminium(III)chlorid, Magnesiumsulfat und/oder Calciumsulfat umfasst, wenigstens ein weiteres Anion, das in seiner höchsten Deprotonierungsstufe vorliegt und in dieser höchsten Deprotonierungsstufe eine Basenstärke (pK_{B}-Wert) von ≥ 9 (vorzugsweise ≥ 10) aufweist, in der Salzkomponente vorliegt.

Details zur Salzkomponente wurden bereits im Zusammenhang mit der erfindungsgemäßen Dispersion geschildert und sollen hinsichtlich der Verwendung nicht wiederholt werden. Es sei lediglich angemerkt, dass in einer Ausführungsform der Verwendung die Salzkomponente ein Halogenid-Anion umfasst. Hierbei ist Chlorid bevorzugt. In einer weiteren Ausführungsform der Verwendung umfasst die Salzkomponente ein Alkali- oder Erdalkalimetallkation. Bevorzugt sind Lithium- und/oder Natrium-Kationen. Es ist weiter bevorzugt, dass die Salzkomponente LiCl und/oder NaCl umfasst. Die Salzkomponente kann neben LiCl und/oder NaCl keine weiteren Salze enthalten.

### Beispiele

Die vorliegende Erfindung wird anhand der nachfolgenden Beispiele weiter erläutert, ohne darauf beschränkt zu sein.

### Ausgangsstoffe:

- Cycloaliphatisches Polyisocyanat H12MDI:
   4,4' Diisocyanatodicyclohexylmethan, CAS-Nr. 79103-62-1
   (Desmodur® W, Covestro Deutschland AG, Leverkusen, DE)
- Carbodiimidisierungskatalysator 1,1-MPO: technisches Gemisch aus 1-Methyl-2-phospholen-1-oxid und 1-Methyl-3-phospholen-1-oxid, CAS-Nr. 872-45-7 und 930-38-1 (Clariant AG, Muttenz, CH)
- Monomethoxy-poly(ethylenglykol) 750, MPEG 750: CAS-Nr. 9004-74-4: (Aldrich, DE)
- Butoxyethanol: CAS-Nr. 111-76-2: (SysKem Chemie GmbH, Wuppertal, DE)

### Methoden:

- Mittlere Teilchengrößenbestimmung: Die Teilchengröße der Polycarbodiimidtröpfchen in der Dispersionen bzw. Lösungen werden mittels Laserkorrelations-Spektroskopie (Gerät: Malvern Zetasizer 1000, Malvern Inst. Limited) ermittelt.
- Leitfähigkeit: Die Bestimmung der elektrischen Leitfähigkeit [µS/cm] erfolgt mit dem Messgerät SevenCompact S230 Conductivity meter der Fa. Mettler Toledo in Kombination mit dem Messsensor InLab 710. Dieses erfolgte in Übereinstimmung mit der Norm DIN EN 27888.
- Bestimmung nicht-flüchtiger Anteile: Die Bestimmung der nicht-flüchtigen Anteile in den Polycarbodiimid-Dispersionen erfolgt nach DIN EN ISO 3251, wobei die Bedingungen bei der Untersuchungen mit folgenden Parametern festgelegt sind: 0,5 g/120 min./125 °C.
- Stabilitätsprüfung: Die Polycarbodiimid-Dispersionen wurden in verschlossenen PE-Flaschen bei 60° C über einen Zeitraum von 120 Stunden gelagert. Vor und nach der der Wärmelagerung wurden die Carbodiimid-Konzentration, die elektrische Leitfähigkeit und der pH-Wert der Proben bestimmt.
- Bestimmung der Carbodiimidkonzentration: Die Bestimmung der Carbodiimid-Konzentration erfolgt mit der ATR-Infrarotspektroskopie Perkin Elmer Spectrum two.

Zunächst wurde Dicyclohexylcarbodiimid (DCC) in Ethanol gelöst (Konzentrationen: 0,1 mmol/g, 0,2 mmol/g, 0,5 mmol/g, 1,0 mmol/g, 1,5 mmol/g und 2 mmol/g). Von diesen Lösungen wurden die IR-Spektren aufgenommen. Die Peakflächen (P_{A}) der Carbodiimidbande bei ca. 2118 cm⁻¹ wurden ermittelt. Aus den Daten (Konzentration c der DCC-Lösungen und den ermittelten P_{A}) wurde eine Kalibriergerade erstellt:
P_{A} = m · c [meq DCC/g], wobei m die Steigung der Kalibriergeraden darstellt.
Die Bestimmung der Carbodiimid-Konzentration erfolgt über PA der Bande bei ca. 2118 cm⁻¹. Die Konzentration [meq DCC/g] wird durch P_{A}/m berechnet.
Die Änderung der Carbodiimid-Konzentration wird in % bezogen auf den Ausgangswert angegeben. Aufgrund der Messbedingungen wird eine Ungenauigkeit für die Angabe der Änderung der Carbodiimid-Konzentration von ± 5 Prozentpunkten angenommen.

Alle analytischen Bestimmungen beziehen sich, soweit nicht anders angegeben, auf eine Temperatur von 23°. Die Referenztemperatur des Messgeräts für die elektrische Leitfähigkeit betrug 20 °C.

### Herstellung der Polycarbodiimid-Dispersionen

Die Polycarbodiimid-Dispersionen pCDI 1 bis pCDI 6 wurden gemäß Beispiel 2 aus WO 2011/120928 A2 (= EP 2 552 982 A2) hergestellt. Man erhielt eine fast transparente Dispersion mit einem pH-Wert zwischen 7 und 9.7, einer mittleren Teilchengröße von 35 nm und einem Anteil nicht-flüchtiger Bestandteile (Feststoffgehalt) von ca. 40 Gew.-%. Die Dispersion pCDI 5 wurde durch Anlegen eines Vakuums von gelöstem CO₂ befreit.

Stabilisierung der Polycarbodiimid-Dispersion: es wurden 0.01-1.0 Gewichts-% Salz der Polycarbodiimid-Dispersion zugesetzt, um die Leitfähigkeit auf einen Wert von > 250 µS/cm einzustellen.

Die erhaltenen Ergebnisse sind in den nachfolgenden Tabellen dargestellt. Mit (*) gekennzeichnete Beispiele sind Vergleichsbeispiele.

### Beispiel 1: pDCI 1

| **Salz** | **Salz [Gew.-%]** | **Vor Wärmelagerung** | | | | **Nach Wärmelagerung 120 Std. 60°C** | | | **Abnahme meq DCC/g [%]** |
|---|---|---|---|---|---|---|---|---|---|
| | | pH | µB/cm | % von µS/cm ohne Salz | meq DCC/g | pH | µS/cm | meq DCC/g | |
| ohne (*) | 0 | 9,7 | 227 | 100% | 1,05 | 10,4 | 271 | 0,64 | -39,0 |
| NaCl | 0,05 | 9,8 | 831 | 366% | 1,05 | 10,2 | 765 | 0,83 | -21,0 |
| NaCl | 0,10 | 9,8 | 1491 | 657% | 1,02 | 10,1 | 1399 | 0,91 | -10,8 |
| NaCl | 0,20 | 9,8 | 2531 | 1115% | 1,06 | 10,1 | 1410 | 0,91 | -14,2 |
| NaCl | 0,50 | 9,8 | 5664 | 2495% | 1,03 | 10,2 | 5737 | 1,01 | -1,9 |
| LiCl | 0,05 | 9,8 | 360 | 159% | 1,02 | 9,8 | 823 | 0,93 | -8,8 |
| LiCl | 0,10 | 9,8 | 981 | 432% | 1,02 | 9,8 | 1243 | 0,95 | -6,9 |
| LiCl | 0,20 | 9,7 | 790 | 348% | 1,04 | 9,7 | 2881 | 1,02 | -1,9 |
| LiCl | 0,50 | 9,5 | 1267 | 558% | 1,04 | 9,5 | 6674 | 1,05 | 1,0 |
| MgCl₂ x 6H₂O | 0,05 | 9,6 | 500 | 220% | 1,07 | 10,1 | 284 | 0,90 | -15,9 |
| MgCl₂ x 6H₂O | 0,10 | 9,5 | 700 | 308% | 1,10 | 10,0 | 463 | 0,94 | -14,5 |
| MgCl₂ x 6H₂O | 0,20 | 9,4 | 1261 | 556% | 1,05 | 9,5 | 1014 | 0,94 | -10,5 |
| MgCl₂ x 6H₂O | 0,50 | 9,3 | 2910 | 1282% | 1,04 | 9,3 | 2641 | 0,96 | -7,7 |
| AlCl₃ | 0,05 | 6,6 | 373 | 164% | 1,09 | 9,1 | 273 | 0,89 | -18,3 |
| AlCl₃ | 0,10 | 3,8 | 577 | 254% | 1,07 | 8,2 | 372 | 0,97 | -9,3 |
| AlCl₃ | 0,20 | 3,2 | 961 | 423% | 1,04 | 5,6 | 515 | 0,81 | -22,1 |
| AlCl₃ (*) | 0,50 | 3,3 | 4844 | 2134% | 1,01 | 3,2 | 3540 | 0,42 | -58,4 |
| NaI | 0,05 | 9,5 | 316 | 139% | 1,02 | 9,8 | 453 | 0,71 | -30,4 |
| NaI | 0,10 | 9,5 | 327 | 144% | 1,02 | 9,9 | 562 | 0,95 | -6,9 |
| NaI | 0,20 | 9,7 | 591 | 260% | 0,98 | 10,1 | 822 | 0,99 | 1,0 |

### Beispiel 2: pDCI 2

| **Salz** | **Salz [Gew.-%]** | **Vor Wärmelagerung** | | | | **Nach Wärmelagerung 120 Std. 60°C** | | | **Abnahme meq DCC/g [%]** |
|---|---|---|---|---|---|---|---|---|---|
| | | pH | µS/cm | % von µS/cm ohne Salz | meq DCC/g | pH | µS/cm | meq DCC/g | |
| ohne (*) | 0 | 8,8 | 115 | 100% | 1,27 | 9,6 | 163 | 0,78 | -38,6 |
| NaCl | 0,05 | 9,0 | 721 | 627% | 1,27 | 9,6 | 718 | 1,14 | -10,2 |
| NaCl | 0,10 | 9,1 | 1333 | 1159% | 1,27 | 9,6 | 1365 | 1,18 | -7,1 |
| NaCl | 0,20 | 8,9 | 2299 | 1999% | 1,30 | 9,5 | 2324 | 1,21 | -6,9 |
| NaCl | 0,50 | 9,2 | 5388 | 4685% | 1,27 | 9,5 | 5478 | 1,21 | -4,7 |
| LiCl | 0,05 | 9,1 | 546 | 475% | 1,28 | 9,8 | 761 | 1,19 | -7,0 |
| LiCl | 0,10 | 9,1 | 774 | 673% | 1,27 | 9,6 | 1473 | 1,22 | -3,9 |
| LiCl | 0,20 | 9,1 | 1212 | 1054% | 1,27 | 9,6 | 2769 | 1,14 | -10,2 |
| LiCl | 0,50 | 9,2 | 5059 | 4399% | 1,26 | 9,5 | 6352 | 1,26 | 0,0 |
| MgCl₂ x 6H₂O | 0,05 | 8,9 | 424 | 369% | 1,27 | 9,4 | 404 | 1,13 | -11,0 |
| MgCl₂ x 6H₂O | 0,10 | 8,9 | 676 | 588% | 1,28 | 9,4 | 652 | 1,15 | -10,2 |
| MgCl₂ x 6H₂O | 0,20 | 8,9 | 1247 | 1084% | 1,27 | 9,3 | 1240 | 1,26 | -0,8 |
| MgCl₂ x 6H₂O | 0,50 | 8,9 | 2814 | 2447% | 1,29 | 9,1 | 2879 | 1,24 | -3,9 |
| AlCl₃ | 0,05 | 4,4 | 387 | 337% | 1,26 | 7,1 | 1336 | 1,10 | -12,7 |
| AlCl₃ (*) | 0,10 | 3,7 | 1002 | 871% | 1,16 | 4,2 | 727 | 0,60 | -48,3 |
| AlCl₃ (*) | 0,20 | 3,5 | 1841 | 1601% | 1,11 | 3,3 | 534 | 0,44 | -60,4 |
| AlCl₃ (*) | 0,50 | 3,1 | 4088 | 3555% | 1,11 | 3,1 | 448 | 0,37 | -66,7 |
| Nal | 0,05 | 9,2 | 228 | 198% | 1,15 | 9,5 | 269 | 1,24 | 7,8 |
| NaI | 0,10 | 9,4 | 366 | 318% | 1,22 | 9,5 | 415 | 1,26 | 3,3 |
| NaI | 0,20 | 9,6 | 703 | 611% | 1,26 | 9,9 | 781 | 1,25 | -0,8 |

### Beispiel 3: pDCI 3

| **Salz** | **Salz [Gew. -%]** | **Vor Wärmelagerung** | | | | **Nach Wärmelagerung 120 Std. 60°C** | | | **Abnahme meq DCC/g [%]** |
|---|---|---|---|---|---|---|---|---|---|
| | | pH | µB/cm | % von µS/cm ohne Salz | meq DCC/g | pH | µS/c m | meq DCC/g | |
| ohne (*) | 0 | 8,1 | 205 | 100% | 1,00 | verfestigt | | 0,63 | -37,0 |
| LiCl | 0,05 | 8,4 | 468 | 228% | 0,99 | 10,0 | 743 | 0,93 | -6,1 |
| LiCl | 0,10 | 8,3 | 731 | 357% | 1,01 | 10,3 | 1454 | 1,00 | -1,0 |
| LiCl | 0,20 | 8,3 | 1734 | 846% | 1,01 | 10,1 | 2747 | 1,05 | 4,0 |
| LiCl | 0,50 | 8,1 | 1049 | 512% | 1,02 | 10,0 | 6641 | 1,03 | 1,0 |
| KCl | 0,10 | 8,4 | 1244 | 607% | 1,01 | 10,2 | 1107 | 0,90 | -10,9 |
| KCl | 0,20 | 8,4 | 2270 | 1107% | 1,00 | 9,6 | 2084 | 0,94 | -6,0 |
| KBr | 0,10 | 8,5 | 789 | 385% | 1,01 | 9,9 | 674 | 0,91 | -9,9 |
| KBr | 0,20 | 8,5 | 1415 | 690% | 1,01 | 9,8 | 1275 | 0,98 | -3,0 |
| MgSO₄ (*) | 0,10 | 8,1 | 685 | 334% | 1,00 | 8,5 | 651 | 0,62 | -38,0 |
| MgSO₄ (*) | 0,20 | 8,1 | 1080 | 527% | 0,97 | 8,7 | 1007 | 0,62 | -36,1 |
| CaSO₄ (*) | 0,10 | 7,8 | 562 | 274% | 0,97 | 7,5 | 558 | 0,64 | -34,0 |
| CaSO₄ (*) | 0,20 | 7,9 | 506 | 247% | 0,99 | 7,9 | 601 | 0,66 | -33,3 |
| NaI | 0,05 | 8,6 | 271 | 132% | 1,01 | 8,8 | 348 | 0,73 | -27,7 |
| NaI | 0,10 | 8,7 | 334 | 163% | 0,96 | 9,2 | 445 | 0,95 | -1,0 |
| NaI | 0,20 | 8,7 | 698 | 340% | 0,95 | 9,4 | 713 | 0,99 | 4,2 |

### Beispiel 4: pCDI 4

| **Salz** | **Salz [Gew.-%]** | **Vor Wärmelagerung** | | | | **Nach Wärmelagerung 120 Std. 60°C** | | | **Abnahme meq DCC/g [%]** |
|---|---|---|---|---|---|---|---|---|---|
| | | pH | µS/cm | % von µS/cm ohne Salz | meq DCC/g | pH | µS/cm | meq DCC/g | |
| ohne (*) | 0 | 8,9 | 157 | 100% | 1,15 | verfestigt | | 0,67 | -41,7 |
| LiCl | 0,05 | 9,0 | 678 | 432% | 1,14 | 10,1 | 748 | 1,07 | -6,1 |
| LiCl | 0,10 | 8,8 | 718 | 457% | 1,13 | 10,2 | 1426 | 1,13 | 0,0 |
| LiCl | 0,20 | 8,8 | 1309 | 834% | 1,14 | 9,6 | 2693 | 1,10 | -3,5 |
| LiCl | 0,50 | 8,8 | 3733 | 2378% | 1,15 | 9,5 | 6418 | 1,17 | 1,7 |
| KCl | 0,10 | 9,1 | 1195 | 761% | 1,16 | 10,0 | 1110 | 1,07 | -7,8 |
| KCl | 0,20 | 9,2 | 2221 | 1415% | 1,14 | 9,7 | 2081 | 1,05 | -7,9 |
| KBr | 0,10 | 9,3 | 719 | 458% | 1,15 | 9,8 | 668 | 1,07 | -7,0 |
| KBr | 0,20 | 9,4 | 1362 | 868% | 1,15 | 9,9 | 1300 | 1,07 | -7,0 |
| NaI | 0,05 | 9,0 | 216 | 138% | 1,09 | 9,4 | 305 | 0,99 | -9,2 |
| NaI | 0,10 | 9,1 | 370 | 236% | 1,15 | 9,5 | 414 | 1,07 | -7,0 |
| NaI | 0,20 | 9,2 | 706 | 450% | 1,09 | 9,8 | 718 | 1,12 | 2,8 |

### Beispiel 5: pDCI 5

| **Salz** | **Salz [Gew.-%]** | **Vor Wärmelagerung** | | | | **Nach Wärmelagerung 120 Std. 60°C** | | | **Abnahme meq DCC/g [%]** |
|---|---|---|---|---|---|---|---|---|---|
| | | pH | µS/cm | % von µS/cm ohne Salz | meq DCC/g | pH | µS/cm | meq DCC/g | |
| ohne (*) | 0 | 7,1 | 174 | 100% | 1,43 | 7,7 | 174 | 1,18 | -17,5 |
| NaCl | 0,10 | 7,5 | 1269 | 729% | 1,41 | 7,9 | 1262 | 1,35 | -4,3 |
| NaCl | 0,20 | 7,4 | 2325 | 1336% | 1,42 | 7,8 | 2460 | 1,36 | -4,2 |
| NaCl | 0,50 | 7,4 | 5638 | 3240% | 1,38 | 7,9 | 5704 | 1,39 | 0,7 |

**Beispiel 6: pDCI 7 (pH-Wert der Dispersion ohne Salzzugabe und vor Wärmelagerung: 9,4)**

| **Salz** | **Salz [mmol/100 g Dispersion]** | **Vor Wärmelagerung** | | | | **Nach Wärmelagerung 120 Std. 60°C** | | | **Abnahme meq DCC/g** [**%**] |
|---|---|---|---|---|---|---|---|---|---|
| | | pH | µS/cm | % von µS/cm ohne Salz | meq DCC/g | pH | µS/cm | meq DCC/g | |
| ohne (*) | 0 | 9,4 | 123 | 100% | 1,28 | 9,5 | 160 | 0,97 | -24,2 |
| NaCl | 2,5 | 9,5 | 1764 | 1434% | 1,25 | 9,5 | 1697 | 1,24 | -0,8 |
| NaCl | 5,0 | 9,4 | 3350 | 2724% | 1,25 | 9,4 | 3230 | 1,29 | 3,2 |
| KCl | 2,5 | 9,4 | 2078 | 1689% | 1,27 | 9,5 | 1993 | 1,24 | -2,4 |
| KCl | 5,0 | 9,3 | 3943 | 3206% | 1,25 | 9,5 | 3846 | 1,24 | -0,8 |
| KBr | 2,5 | 9,4 | 1566 | 1273% | 1,28 | 9,5 | 1523 | 1,25 | -2,3 |
| KBr | 5,0 | 9,3 | 2912 | 2367% | 1,24 | 9,4 | 2871 | 1,25 | 0,8 |
| LiCl | 2,5 | 9,6 | 1995 | 1622% | 1,26 | 9,7 | 1937 | 1,27 | 0,8 |
| LiCl | 5,0 | 9,5 | 3818 | 3104% | 1,26 | 9,6 | 3725 | 1,27 | 0,8 |
| KF | 2,5 | 9,3 | 1863 | 1515% | 1,26 | 9,5 | 1877 | 1,09 | -13,5 |
| KF | 5,0 | 9,3 | 3402 | 2766% | 1,27 | 9,5 | 3357 | 1,10 | -13,4 |
| NaI | 2,5 | 9,8 | 1506 | 1224% | 1,28 | 10,1 | 1450 | 1,26 | -1,6 |
| NaI | 5,0 | 9,9 | 2871 | 2334% | 1,26 | 10,2 | 2783 | 1,27 | 0,8 |

## Patentansprüche

1. Wässrige Dispersion von hydrophil modifizierten Polycarbodiimidharzen,
**dadurch gekennzeichnet, dass**
die Dispersion eine Salzkomponente umfasst, welche wenigstens ein Salz mit einem Kation und einem Anion umfasst, das in seiner höchsten Deprotonierungsstufe vorliegt und in dieser höchsten Deprotonierungsstufe eine Basenstärke (pK_{B}-Wert) von ≥ 9 aufweist,
die Dispersion eine elektrische Leitfähigkeit gemäß DIN EN 27888 und gemessen bei 20 °C aufweist, welche höher ist als die einer nicht die Salzkomponente umfassenden, jedoch ansonsten identischen Dispersion,
wobei für den Fall, dass die Salzkomponente Magnesiumsulfat und/oder Calciumsulfat umfasst, wenigstens ein weiteres Anion mit einer Basenstärke (pK_{B}-Wert) von ≥ 9 in seiner höchsten Deprotonierungsstufe in der Salzkomponente vorliegt und
wobei für den Fall, dass die Salzkomponente Aluminium(III)chlorid zu ≥ 95 mol-% umfasst, die elektrische Leitfähigkeit der Dispersion gemäß DIN EN 27888 und gemessen bei 20 °C ≤ 1000% der Leitfähigkeit einer nicht die Salzkomponente umfassenden, jedoch ansonsten identischen Dispersion beträgt.

2. Dispersion gemäß Anspruch 1, wobei die Dispersion eine elektrische Leitfähigkeit gemäß DIN EN 27888 und gemessen bei 20 °C aufweist, welche ≥ 140% der Leitfähigkeit einer nicht die Salzkomponente umfassenden, jedoch ansonsten identischen Dispersion beträgt.

3. Dispersion gemäß Anspruch 1 oder 2, wobei die die Dispersion eine elektrische Leitfähigkeit gemäß DIN EN 27888 und gemessen bei 20 °C von ≥ 300 µS/cm aufweist.

4. Dispersion gemäß einem der Ansprüche 1 bis 3, wobei die Salzkomponente ein Halogenid-Anion umfasst.

5. Dispersion gemäß einem der Ansprüche 1 bis 4, wobei die Salzkomponente ein Alkali- oder Erdalkalimetallkation umfasst.

6. Dispersion gemäß einem der Ansprüche 1 bis 5, wobei die Dispersion weiterhin durch Anlegen eines Unterdrucks wenigstens teilweise von CO₂ befreit wurde.

7. Dispersion gemäß einem der Ansprüche 1 bis 6, wobei die Dispersion einen pH-Wert von ≥ 5 bis ≤ 9,8 aufweist.

8. Dispersion gemäß einem der Ansprüche 1 bis 7, wobei die Salzkomponente in einem Anteil von ≥ 0,01 bis ≤ 1 Gewichts-%, bezogen auf das Gesamtgewicht der Dispersion, vorliegt.

9. Dispersion gemäß einem der Ansprüche 1 bis 8, wobei die Dispersion nach Lagerung bei 60 °C für 120 Stunden ≥ 90% des ursprünglichen Gehalts an Polycarbodiimiden aufweist.

10. Verfahren zur Herstellung einer wässrigen Dispersion von hydrophil modifizierten Polycarbodiimidharzen, umfassend die Schritte:
A) Reagieren eines Polyisocyanats in Gegenwart eines Carbodiimidisierungs-Katalysators unter Erhalt eines Polycarbodiimids;
B) Hinzufügen einer Verbindung, welche mindestens eine gegenüber Isocyanat- und/oder Carbodiimidgruppen reaktionsfähige Gruppe enthält, während oder nach der Polycarbodiimidbildung in Schritt A);
C) Dispergieren der nach Schritt B) erhaltenen Verbindung in Wasser unter Erhalt einer Dispersion;
**dadurch gekennzeichnet, dass**
das Verfahren weiterhin den Schritt umfasst:
D) Hinzufügen einer Salzkomponente zu:
- dem in Schritt C) verwendeten Wasser vor und/oder während der Dispergierung,
- der nach Schritt C) erhaltenen Dispersion,
- dem in Schritt A) eingesetzten Polyisocyanat und/oder
- der in Schritt B) eingesetzten Verbindung
so dass die Dispersion eine elektrische Leitfähigkeit gemäß DIN EN 27888 und gemessen bei 20 °C aufweist, welche höher ist als die einer nicht die Salzkomponente umfassenden, jedoch ansonsten identischen Dispersion,
wobei die Salzkomponente wenigstens ein Salz mit einem Kation und einem Anion umfasst, das in seiner höchsten Deprotonierungsstufe vorliegt und in dieser höchsten Deprotonierungsstufe eine Basenstärke (pKB-Wert) von ≥ 9 aufweist,
wobei für den Fall, dass die Salzkomponente Magnesiumsulfat und/oder Calciumsulfat umfasst, wenigstens ein weiteres Anion mit einer Basenstärke (pK_{B}-Wert) von ≥ 9 in seiner höchsten Deprotonierungsstufe in der Salzkomponente vorliegt und
wobei für den Fall, dass die Salzkomponente Aluminium(III)chlorid zu ≥ 95 mol-% umfasst, die elektrische Leitfähigkeit der Dispersion gemäß DIN EN 27888 und gemessen bei 20 °C ≤ 1000% der Leitfähigkeit einer nicht die Salzkomponente umfassenden, jedoch ansonsten identischen Dispersion beträgt.

11. Verfahren gemäß Anspruch 10, wobei in Schritt B) eine Verbindung eingesetzt wird, welche eine hydrophile Gruppe und mindestens eine gegenüber Isocyanat- und/oder Carbodiimidgruppen reaktionsfähige Gruppe enthält.

12. Verfahren gemäß Anspruch 10 oder 11, wobei die Salzkomponente ein Halogenid-Anion und/oder ein Alkali- oder Erdalkalimetallkation umfasst.

13. Verfahren gemäß einem der Ansprüche 10 bis 12, wobei die Dispersion weiterhin durch Anlegen eines Unterdrucks wenigstens teilweise von CO₂ befreit wurde.

14. Verfahren gemäß einem der Ansprüche 10 bis 13, wobei das Polyisocyanat in Schritt A) ein aliphatisches Polyisocyanat ist.

15. Verwendung einer Salzkomponente zur Verringerung der Carbodiimid-Hydrolyse in wässrigen Dispersionen von hydrophil modifizierten Polycarbodiimidharzen,
**dadurch gekennzeichnet, dass**
die Salzkomponente wenigstens ein Salz mit einem Kation und einem Anion umfasst, das in seiner höchsten Deprotonierungsstufe eine Basenstärke (pK_{B}-Wert) von ≥ 9 aufweist,
wobei für den Fall, dass die Salzkomponente Aluminium(III)chlorid, Magnesiumsulfat und/oder Calciumsulfat umfasst, wenigstens ein weiteres Anion, das in seiner höchsten Deprotonierungsstufe vorliegt und in dieser höchsten Deprotonierungsstufe eine Basenstärke (pK_{B}-Wert) von ≥ 9 aufweist, in der Salzkomponente vorliegt.

## Claims

1. Aqueous dispersion of hydrophilically modified polycarbodiimide resins,
**characterized in that**
the dispersion comprises a salt component that comprises at least one salt having a cation and an anion that is present in its highest deprotonation level and in this highest deprotonation level has a base strength (pK_{B}) of ≥ 9,
the dispersion has an electrical conductivity in accordance with DIN EN 27888 and measured at 20°C that is higher than that of a dispersion minus the salt component but otherwise identical, wherein, when the salt component comprises magnesium sulfate and/or calcium sulfate, at least one further anion having a base strength (pK_{B}) of ≥ 9 is present in its highest deprotonation level in the salt component, and
wherein, when the salt component comprises aluminum(III) chloride in a content of ≥ 95 mol%, the electrical conductivity of the dispersion in accordance with DIN EN 27888 and measured at 20°C is ≤ 1000% of the conductivity of a dispersion minus the salt component but otherwise identical.

2. Dispersion according to Claim 1, wherein the dispersion has an electrical conductivity in accordance with DIN EN 27888 and measured at 20°C that is ≥ 140% of the conductivity of a dispersion minus the salt component but otherwise identical.

3. Dispersion according to Claim 1 or 2, wherein the the dispersion has an electrical conductivity in accordance with DIN EN 27888 and measured at 20°C of ≥ 300 µS/cm.

4. Dispersion according to any of Claims 1 to 3, wherein the salt component comprises a halide anion.

5. Dispersion according to any of Claims 1 to 4, wherein the salt component comprises an alkali metal cation or alkaline earth metal cation.

6. Dispersion according to any of Claims 1 to 5, wherein the dispersion was additionally at least partially freed of CO₂ by application of vacuum.

7. Dispersion according to any of Claims 1 to 6, wherein the dispersion has a pH of ≥ 5 to ≤ 9.8.

8. Dispersion according to any of Claims 1 to 7, wherein the salt component is present in a proportion by weight of ≥ 0.01% to ≤ 1% based on the total weight of the dispersion.

9. Dispersion according to any of Claims 1 to 8, wherein the dispersion has ≥ 90% of the original polycarbodiimide content after storage at 60°C for 120 hours.

10. Method for preparing an aqueous dispersion of hydrophilically modified polycarbodiimide resins, comprising the following steps:
A) reacting a polyisocyanate in the presence of a carbodiimidization catalyst to obtain a polycarbodiimide;
B) adding a compound that contains at least one group reactive toward isocyanate and/or carbodiimide groups during or after polycarbodiimide formation in step A);
C) dispersing the compound obtained after step B) in water to obtain a dispersion;
**characterized in that**
the method further comprises the following step:
D) adding a salt component to:
- the water used in step C) before and/or during the dispersion,
- the dispersion obtained after step C),
- the polyisocyanate used in step A) and/or
- the compound used in step B)
with the result that the dispersion has an electrical conductivity in accordance with DIN EN 27888 and measured at 20°C that is higher than that of a dispersion minus the salt component but otherwise identical,
wherein the salt component comprises at least one salt having a cation and an anion that is present in its highest deprotonation level and in this highest deprotonation level has a base strength (pK_{B}) of ≥ 9, wherein, when the salt component comprises magnesium sulfate and/or calcium sulfate, at least one further anion having a base strength (pK_{B}) of ≥ 9 is present in its highest deprotonation level in the salt component, and
wherein, when the salt component comprises aluminum(III) chloride in a content of ≥ 95 mol%, the electrical conductivity of the dispersion in accordance with DIN EN 27888 and measured at 20°C is ≤ 1000% of the conductivity of a dispersion minus the salt component but otherwise identical.

11. Method according to Claim 10, wherein, in step B), a compound is used that contains a hydrophilic group and at least one group reactive toward isocyanate and/or carbodiimide groups.

12. Method according to Claim 10 or 11, wherein the salt component comprises a halide anion and/or an alkali metal cation or alkaline earth metal cation.

13. Method according to any of Claims 10 to 12, wherein the dispersion was additionally at least partially freed of CO₂ by application of vacuum.

14. Method according to any of Claims 10 to 13, wherein the polyisocyanate in step A) is an aliphatic polyisocyanate.

15. Use of a salt component for reducing carbodiimide hydrolysis in aqueous dispersions of hydrophilically modified polycarbodiimide resins,
**characterized in that**
the salt component comprises at least one salt having a cation and an anion that in its highest deprotonation level has a base strength (pK_{B}) of ≥ 9,
wherein, when the salt component comprises aluminum(III) chloride, magnesium sulfate and/or calcium sulfate, at least one further anion that is present in its highest deprotonation level and in this highest deprotonation level has a base strength (pK_{B}) of ≥ 9 is present in the salt component.

## Revendications

1. Dispersion aqueuse de résines polycarbodiimide à modification hydrophile,
**caractérisée en ce que**
la dispersion comprend un composant sel qui comprend au moins un sel avec un cation et un anion, qui se trouve à son degré de déprotonation le plus élevé et présente à ce degré de déprotonation le plus élevé une force de base (pK_{B}) de ≥ 9,
la dispersion présente une conductivité électrique, selon DIN EN 27888 et mesurée à 20 °C, qui est supérieure à celle d'une dispersion ne comprenant pas le composant sel, mais par ailleurs identique,
dans le cas où le composant sel comprend du sulfate de magnésium et/ou du sulfate de calcium, au moins un autre anion qui a une force de base (pK_{B}) de ≥ 9 à son degré de protonation le plus élevé étant présent dans le composant sel et
dans le cas où le composant sel comprend du chlorure d'aluminium(III) à ≥ 95 % en moles, la conductivité électrique de la dispersion, selon DIN EN 27888 et mesurée à 20 °C, représentant ≤ 1 000 % de la conductivité d'une dispersion qui ne comprend pas le composant sel, mais par ailleurs est identique.

2. Dispersion selon la revendication 1, dans laquelle la dispersion présente une conductivité électrique, selon DIN EN 27888 et mesurée à 20 °C, qui représente ≥ 140 % de la conductivité d'une dispersion qui ne comprend pas le composant sel, mais par ailleurs est identique.

3. Dispersion selon la revendication 1 ou 2, dans laquelle la dispersion présente une conductivité électrique, selon DIN EN 27888 et mesurée à 20 °C, de ≥ 300 µS/cm.

4. Dispersion selon l'une quelconque des revendications 1 à 3, dans laquelle le composant sel comprend un anion halogénure.

5. Dispersion selon l'une quelconque des revendications 1 à 4, dans laquelle le composant sel comprend un cation de métal alcalin ou alcalino-terreux.

6. Dispersion selon l'une quelconque des revendications 1 à 5, dans laquelle la dispersion a en outre été au moins partiellement privée de CO₂ par application d'une pression réduite.

7. Dispersion selon l'une quelconque des revendications 1 à 6, dans laquelle la dispersion présente un pH de ≥ 5 à ≤ 9,8.

8. Dispersion selon l'une quelconque des revendications 1 à 7, dans laquelle le composant sel est présent en une proportion de ≥ 0,01 à ≤ 1 % en poids, par rapport au poids total de la dispersion.

9. Dispersion selon l'une quelconque des revendications 1 à 8, dans laquelle la dispersion, après stockage à 60 °C pendant 120 heures, présente ≥ 90 % de la teneur initiale en polycarbodiimides.

10. Procédé pour la préparation d'une dispersion aqueuse de résines polycarbodiimide à modification hydrophile, comprenant les étapes :
A) mise en réaction d'un polyisocyanate en présente d'un catalyseur de carbodiimidation, avec obtention d'un polycarbodiimide ;
B) addition d'un composé qui contient au moins un groupe réactif vis-à-vis de groupes isocyanate et/ou carbodiimide, pendant ou après la formation de polycarbodiimide dans l'étape A) ;
C) dispersion dans de l'eau du composé obtenu après l'étape B), avec obtention d'une dispersion ;
**caractérisé en ce que**
le composé comprend l'étape :
D) addition d'un composant sel :
- à l'eau utilisée dans l'étape C), avant et/ou pendant la dispersion,
- à la dispersion obtenue après l'étape C),
- au polyisocyanate utilisé dans l'étape A) et/ou
- au composé utilisé dans l'étape B)
de sorte que la dispersion présente une conductivité électrique, selon DIN EN 27888 et mesurée à 20 °C, qui est supérieure à celle d'une dispersion ne comprenant pas le composant sel, mais par ailleurs identique,
le composant sel comprenant au moins un sel avec un cation et un anion, qui se trouve à son degré de déprotonation le plus élevé et présente à ce degré de déprotonation le plus élevé une force de base (pK_{B}) de ≥ 9,
dans le cas où le composant sel comprend du sulfate de magnésium et/ou du sulfate de calcium, au moins un autre anion qui a une force de base (pK_{B}) de ≥ 9 à son degré de protonation le plus élevé étant présent dans le composant sel et
dans le cas où le composant sel comprend du chlorure d'aluminium(III) à ≥ 95 % en moles, la conductivité électrique de la dispersion, selon DIN EN 27888 et mesurée à 20 °C, représentant ≤ 1 000 % de la conductivité d'une dispersion qui ne comprend pas le composant sel, mais par ailleurs est identique.

11. Procédé selon la revendication 10, dans lequel on utilise dans l'étape B) un composé qui contient un groupe hydrophile et au moins un groupe réactif vis-à-vis de groupes isocyanate et/ou carbodiimide.

12. Procédé selon la revendication 10 ou 11, dans lequel le composant sel comprend un anion halogénure et/ou un cation de métal alcalin ou alcalino-terreux.

13. Procédé selon l'une quelconque des revendications 10 à 12, dans lequel la dispersion a en outre été au moins partiellement privée de CO₂ par application d'une pression réduite.

14. Procédé selon l'une quelconque des revendications 10 à 13, dans lequel le polyisocyanate dans l'étape A) est un polyisocyanate aliphatique.

15. Utilisation d'un composant sel pour diminuer l'hydrolyse de carbodiimides dans des dispersions aqueuses de résines polycarbodiimide à modification hydrophile,
**caractérisée en ce que**
le composant sel comprend au moins un sel avec un cation et un anion, qui présente à son degré de déprotonation le plus élevé une force de base (pK_{B}) de ≥ 9,
dans le cas où le composant sel comprend du chlorure d'aluminium(III), du sulfate de magnésium et/ou du sulfate de calcium, au moins un autre anion, qui se trouve à son degré de déprotonation le plus élevé et présente à ce degré de protonation le plus élevé une force de base (pK_{B}) de ≥ 9, étant présent dans le composant sel.
